# EUROPEAN PATENT SPECIFICATION

(11) **EP 2 656 533 B1**
(45) Date of publication and mention of the grant of the patent: **23.09.2015**
(21) Application number: 11793781.3
(22) Date of filing: 07.12.2011
(51) Int. Cl.: H04L 7/027, H04B 10/61, H04B 10/25

(54) **METHOD FOR RECOVERING CLOCK INFORMATION FROM A RECEIVED OPTICAL SIGNAL**
VERFAHREN ZUR GEWINNUNG VON TAKTINFORMATIONEN AUS EINEM EMPFANGENEN OPTISCHEN SIGNAL
PROCÉDÉ POUR LA RÉCUPÉRATION DE DONNÉES D'HORLOGE À PARTIR D'UN SIGNAL OPTIQUE REÇU

(43) Date of publication of application: 30.10.2013
(73) Proprietor: Huawei Technologies Co., Ltd., Longgang District Shenzhen, Guangdong 518129 (CN)
(72) Inventor: STOJANOVIC, Nebojsa, 80992 Munich (DE)
(74) Representative: Kreuz, Georg Maria
(86) International application number: PCT/EP2011/072047
(87) International publication number: WO 2013/083190

(56) References cited:
- EP-A1- 2 357 740
- US-A1- 2006 285 855
- MAXIM KUSCHNEROV ET AL: "DSP for Coherent Single-Carrier Receivers", JOURNAL OF LIGHTWAVE TECHNOLOGY, IEEE SERVICE CENTER, NEW YORK, NY, US, vol. PP, no. 16, 15 August 2009 (2009-08-15), pages 3614-3622, XP011262207, ISSN: 0733-8724
- ZHOU XIAN ET AL: "Digital timing recovery combined with adaptive equalization for optical coherent receivers", COMMUNICATIONS AND PHOTONICS CONFERENCE AND EXHIBITION, 2009. ACP 2009. ASIA, IEEE, PISCATAWAY, NJ, USA, 2 November 2009 (2009-11-02), pages 1-6, XP031623309, ISBN: 978-1-55752-877-3

## Description

### BACKGROUND OF THE INVENTION

The present invention relates to a method for recovering clock information from a received optical signal, a clock recovery unit for recovering clock information from the received optical signal, a chromatic dispersion estimation unit for estimating a chromatic dispersion from the received optical signal and a coherent optical receiver for receiving the optical signal.

In optical systems, the received signal is often distorted by noise, chromatic dispersion (CD), polarization mode dispersion (PMD), etc. The effect of noise cannot be avoided, and it increases sampling phase variations. However, the effect of CD and PMD is a limiting factor for clock recovery. As for PMD, the state of polarization (SOP) and the differential group delay (DGD) limit the clock information. The estimation of SOP variables, however, depends on the sampling phase. When VCO clock is not locked to data or when there is data processing delay and high data jitter, clock recovery by estimation of SOP variables results in bad performance.

US 2006/0285855 A1 relates to a method of recovering a clock signal from an optical signal received through an optical communications system. A digital sample stream is processed to generate a dispersion compensated signal. The dispersion compensated signal is then tapped to obtain upper side band and lower side, band signals of each received polarization of the optical signal. The upper side band sand lower side band signals are then processed to compensate polarization dependent impairments and the clock recovered from the resulting optimized.

EP 2357740 A1 relates to an optical receiver including: a waveform distortion compensator to perform an operation on digital signal representing an optical signal generated by an A/D converter to compensate for waveform distortion of the optical signal; a phase detector to generate phase information representing sampling phase of the AID converter; a phase adjuster to generate digital signal representing an optical signal in which the sampling phase of the AID converter is adjusted from an output signal of the waveform distortion compensator using the phase information; a demodulator to generate a demodulated signal from the output signal of the phase adjuster; a phase controller to control the sampling phase of the A/D converter; a peak detector to detect a peak value of the phase information while the sampling phase of the AID converter is controlled by the phase controller; and a compensation controller to control the waveform distortion compensator using the peak value.

### SUMMARY OF THE INVENTION

It is the object of the invention to provide a concept for an improved optical transmission over long-haul optical fibre systems.

This object is achieved by the features of the independent claims. Further implementation forms are apparent from the dependent claims, the description and the figures.

The invention is based on the finding that modifying the SOP state of the received optical signal according to an optimization criterion makes the estimation of SOP variables independent on the sampling phase. Thus, it is not necessary to lock the VCO to the received data clock when estimating chromatic distortion and polarization mode distortion. The phase-independent estimation of CD and PMD results in an improved clock recovery thereby transmitting higher data rates over longer distances. The optimization criterion may be based on a quality of timing information, also called timing error detector metric (TEDM) which is derived from a timing error detector characteristic (TEDC) of a phase detector (PD). The optimization may be performed by an algorithm calculating the best TEDM with respect to modifications of the SOP states, wherein such modifications may be obtained by rotating a first and a second principal state of polarization of the received optical signal with respect to a latitude angle (⊐) and a longitude angle (θ) on a Poincaré sphere. The Poincaré sphere is used for describing polarization states of the received optical signal.

The invention is further based on the finding that the TEDC can be approximated by a sinusoidal function: $TEDC \left(τ\right) = A sin \left(τ+ψ\right)$
where the second angle is just a phase shift. When using such a sinusoidal approximation for the TEDC, a TEDM function can be found, for example as follows: $TEDM \left(τ\right) = {TEDC}^{2} \left(τ\right) + {TEDC}^{2} ⁢ \left(τ+π/4\right)$ $TEDM \left(τ\right) = {A}^{2} ⁢ \left({sin}^{2}⁢\left(τ+ψ\right)+{cos}^{2}⁢\left(τ+ψ\right)\right) = {A}^{2}$
which does not depend on the current sampling phase. Such a TEDM function not depending on the sampling phase is not influenced by the clock recovery state, i.e. the clock recovery needs not to be in tracking phase. So, it is not necessary to lock the VCO to the received data clock for the TEDM estimation.

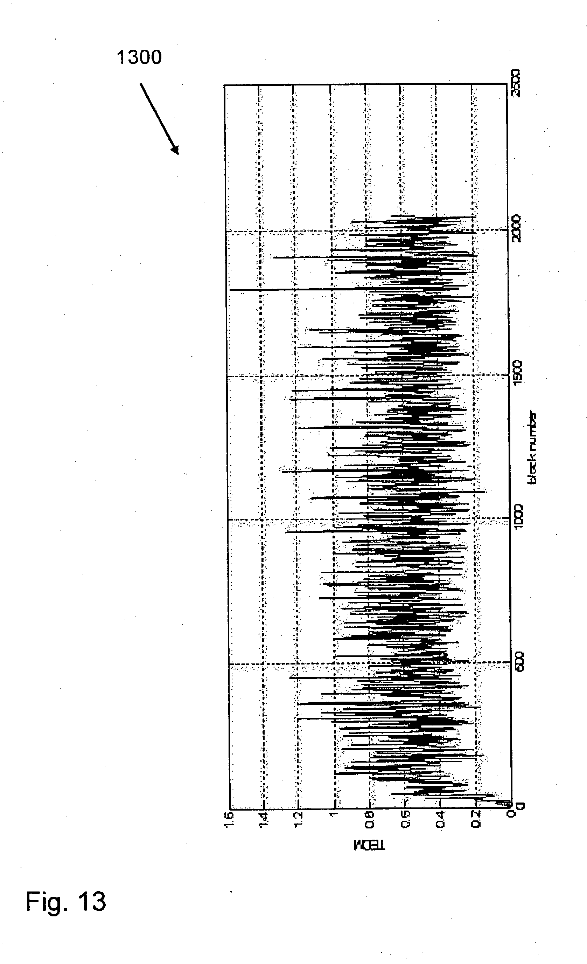

As the TEDM value varies over time, as can be seen from Fig. 13 described below, averaging the estimations improves the results for the TEDM value with respect to accuracy.

In order to describe the invention in detail, the following terms, abbreviations and notations will be used:
- PMD:: Polarization-Mode Dispersion
- CD:: Chromatic Dispersion
- SOP:: State of Polarization
- QAM:: Quadrature Amplitude Modulation
- VCO:: Voltage Controlled Oscillator
- FD:: Frequency Domain
- TD:: Time Domain
- FFT:: Fast Fourier Transform
- IFFT:: Inverse Fast Fourier Transform
- DSP:: Digital Signal Processing
- ADC:: Analogue/Digital converter
- LO:: Local Oscillator
- TIA:: Transimpedance Amplifier
- OFE:: Optical Front End
- TEDC:: Timing Error Detector Characteristic
- TEDM:: Quality of Timing Information, Timing Error Detector Metric
- PD:: Phase Detector
- DGD:: Differential Group Delay
- I:: Inphase
- Q:: Quadrature
- DP-QPSK:: Dual Polarization Quaternary Phase Shift Keying
- LUT:: Look-up-table
- B2B:: Back-to-back
- LPF:: Low Pass Filter
- τ:: sampling instant
- PBS:: Polarization Beam Splitter

According to a first aspect, the invention relates to a method for recovering clock information from a received optical signal, the received optical signal having a first and a second principal state of polarization, the method comprises modifying the first and the second principal state of polarization according to an optimization criterion and detecting the clock information based on the modified first and second principal states of polarization.

In a first possible implementation form of the method according to the first aspect, the modifying comprises rotating the first and the second principal state of polarization with respect to a latitude angle and a longitude angle on a Poincaré sphere, the Poincaré sphere describing polarization states of the received optical signal.

In a second possible implementation form of the method according to the first aspect as such or according to the first implementation form of the first aspect, the modifying comprises transforming the first and the second principal state of polarization into frequency domain obtaining a frequency-transformed first and a frequency-transformed second principal state of polarization and applying a rotation matrix to the frequency-transformed first and the frequency-transformed second principal state of polarization.

In a third possible implementation form of the method according to the first aspect as such or according to the any of the preceding implementation forms of the first aspect, the optimization criterion is based on a selection of SOP parameters providing best timing error detector metric describing a quality of a timing information independent on a sampling instant t of the received optical signal.

In a fourth possible implementation form of the method according to the third implementation form of the first aspect, the timing error detector metric depends on a timing error detector characteristic function, the timing error detector characteristic function approximating a sinusoidal function of the sampling instant τ of the received optical signal.

In a fifth possible implementation form of the method according to the fourth implementation form of the first aspect, the timing error detector metric depends on a time-averaged power of the timing error detector characteristic function.

In a sixth possible implementation form of the method according to any of the second to the fourth implementation forms of the first aspect, the modifying is such that the timing error detector metric is independent of the sampling instant of the received optical signal.

In a seventh possible implementation form of the method according to the first aspect as such or according to the any of the preceding implementation forms of the first aspect, the method further comprises providing an estimate of a chromatic dispersion of the received optical signal.

In an eighth possible implementation form of the method according to the seventh implementation form of the first aspect, the estimating the chromatic dispersion comprises averaging rotated versions of the first and second principal states of polarization by a cost function, the rotation being with respect to a latitude angle and a longitude angle on the Poincaré sphere.

In a ninth possible implementation form of the method according to the eighth implementation form of the first aspect, a rotation of each of the rotated versions of the first and second principal states of polarization is with respect to a different combination of values for the latitude angle and the longitude angle.

In a tenth possible implementation form of the method according to the eighth or the ninth implementation form of the first aspect, a rotated version of the first and second principal states of polarization is obtained by transforming the first and the second principal state of polarization into frequency domain obtaining a frequency-transformed first and a frequency-transformed second principal state of polarization and applying a rotation matrix to the frequency-transformed first and the frequency-transformed second principal state of polarization.

In an eleventh possible implementation form of the method according to any of the eighth to the tenth implementation forms of the first aspect, the cost function is based on different modifications, in particular four different modifications, of the first and the second principal state of polarization obtaining corresponding timing error detector metrics, a timing error detector metric describing a quality of a timing information.

In a twelfth possible implementation form of the method according to the eleventh implementation form of the first aspect, the method further comprises selecting highest values, in particular three highest values, of the cost function and using a polynomial approximation, in particular a second-order polynomial approximation, based on the selected highest values to provide the estimate of the chromatic dispersion as a location of a maximum value of the polynomial approximation.

In a thirteenth possible implementation form of the method according to the twelfth implementation form of the first aspect, the method further comprises compensating the chromatic dispersion of the received optical signal by combining an inverse of the estimate of the chromatic dispersion with the frequency-transformed first and the frequency-transformed second principal state of polarization.

In a fourteenth possible implementation form of the method according to the first aspect as such or according to the any of the preceding implementation forms of the first aspect, the method comprises controlling a phase and a frequency of a voltage controlled oscillator via feed-back loop based on the clock information.

In a fifteenth possible implementation form of the method according to the first aspect as such or according to the any of the preceding implementation forms of the first aspect, the method comprises controlling data sampling in an analog-to-digital converter based on the clock information.

In a sixteenth possible implementation form of the method according to the first aspect as such or according to any of the preceding implementation forms of the first aspect, the method comprises interpolating an optical signal from the received optical signal, the interpolating being based on the modified first and second principal states of polarization.

In an implementation form, the received optical signal of the method according to the first aspect as such or according to the any of the implementation forms of the first aspect is a PSK or a QAM signal, in particular a BPSK or a QPSK signal.

The method according to the first aspect as such or according to the any of the implementation forms of the first aspect is applicable to any modulation scheme using any PSK or QAM modulation. Each of the PSK and QAM signals may be transmitted using single polarization transmission or using POLMUX transmission. The computation is fast, robust and accurate.

The method according to the first aspect as such or according to the any of the implementation forms of the first aspect is applicable in particular for long-haul transmission using 100-Gb/s polarization-multiplexed quadrature phase shift keying (POLMUX-QPSK) modulation, which is likely to become the next standard for long-haul optical transmission systems. POLMUX-QPSK modulation is often also referred to as CP-QPSK, PDM-QPSK, 2P-QPSK or DP-QPSK.

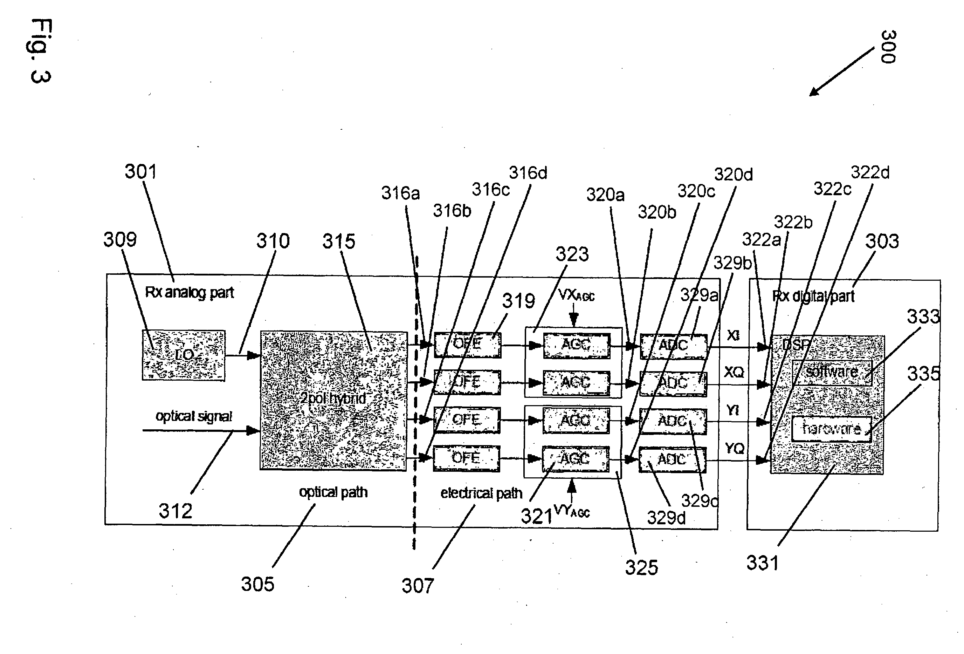

A POLMUX-QPSK transmitter consists of two quadrature (e.g. QPSK) modulators and a polarization beam splitter (PBS) to multiplex the two outputs on orthogonal polarizations. At the receiver side, as will be described below with respect to Fig. 3, the received optical signal is split in two tributaries with arbitrarily, but orthogonal, polarizations using a PBS. In Rx, there are two PBSs, one for the received signal and one for the signal from LO. Both tributaries are subsequently mixed in a 90° hybrid structure with the output of a local oscillator. The outputs of the 90° hybrids (in-phase and quadrature components of both polarizations) are then detected with 4 photodiodes (either balanced or single-ended) and converted to the digital domain using high-speed analogue-to-digital converters (ADCs).

As POLMUX-QPSK modulates 4 bits per symbol, a low symbol rate of ∼28 Gbaud is sufficient to obtain a 111-Gb/s line rate. This translates into a 100-Gb/s net data rate when a forward-error correction (FEC) overhead of ∼7% and an Ethernet overhead of ∼4% are subtracted. The lower symbol rate improves the tolerance to linear transmission impairments, which in turn allows for less stringent requirements on the electrical equalization, as well as making it possible to use lower-frequency electrical components.

According to a second aspect, the invention relates to a computer program product for implementing the method according to the first aspect as such or according to any of the preceding implementation forms of the first aspect.

According to a third aspect, the invention relates to a clock recovery unit for recovering clock information from a received optical signal, the received optical signal having a first and a second principal state of polarization, the clock recovery unit comprising a modifier configured to modify the first and the second principal state of polarization according to an optimization criterion and a detector configured to detect the clock information based on the modified first and second principal states of polarization.

According to a fourth aspect, the invention relates to a chromatic dispersion estimation unit for estimating a chromatic dispersion from a received optical signal, the received optical signal having a first and a second principal state of polarization, the chromatic dispersion estimation unit comprises an averaging unit configured to average rotated versions of the first and second principal states of polarization by a cost function, the rotation being with respect to a latitude angle and a longitude angle on a Poincaré sphere, the Poincaré sphere describing polarization states of the received optical signal, the cost function being based on different modifications, in particular four different modifications, of the first and the second principal state of polarization obtaining corresponding timing error detector metrics, a timing error detector metric describing a quality of a timing information with respect to a sampling instant of the received optical signal, and a selection unit configured to select highest values, in particular three highest values, of the cost function and using a polynomial approximation, in particular a second-order polynomial approximation, based on the selected highest values for providing an estimate of the chromatic dispersion as a location of a maximum value of the polynomial approximation.

According to a fifth aspect, the invention relates to a coherent optical receiver for receiving an optical signal, the received optical signal having a first and a second principal state of polarization, the coherent optical receiver comprises a clock recovery unit according the third aspect, a chromatic dispersion estimation unit according the fourth aspect, a voltage controlled oscillator which feed-back loop is controlled based on the clock information of the clock recovery unit and an interpolation unit configured to interpolate an optical signal from the received optical signal based on the modified first and second principal states of polarization and based on the estimate of the chromatic dispersion.

Coherent optical receivers according to the fifth aspect are used in long-haul optical fiber systems for transmitting the highest data throughput over the longest distance without signal regeneration in optical-electrical-optical regenerators. Given constraints on the bandwidth imposed by optical amplifiers and ultimately by the fibre itself, coherent optical receivers according to the fifth aspect maximize spectral efficiency. Coherent optical receivers according to the fifth aspect may use binary modulation formats, such as on-off keying encoding one bit per symbol.

Coherent optical receivers according to the fifth aspect may use advanced modulation formats to enable high capacity and spectral efficiency. Coherent optical receivers according to the fifth aspect may use polarization multiplexing, quadrature amplitude modulation and coherent detection and thereby allow information encoding in all the available degrees of freedom. Coherent optical receivers according to the fifth aspect using QAM constellation are already available in 40 and 100 Gb/s optical systems. Coherent optical receivers according to the fifth aspect may be applied in future 400 Gb/s transmission systems.

According to a sixth aspect, the invention relates to a method for feed-back/feed-forward timing recovery comprising:
- CD estimation and compensation;
- SOP rotation;
- Controlling the VCO phase and frequency via feed-back loop for data
- sampling in the ADC and clocking;
- Data interpolation to compensate for large data delay trough processing blocks in the presence of large jitter and SOP variations.

According to a seventh aspect, the invention relates to a method for monitoring CD and SOP variations.

Aspects of the invention solve the problems of making CD estimation insensitive to SOP state and of making CD estimation insensitive to PMD. Aspects of the invention show that SOP control is enough for avoiding timing information of low values.

Aspects of the invention provide a robust solution for clock extraction in digital frequency domain.

Aspects of the invention provide have the following advantages:
- The amount of chromatic dispersion is determinated using a fast and reliable method. The method is implemented in frequency domain and may use already implemented recourses for CD compensation.
- The clock recovery works in the presence of PMD with arbitrary SOP state.
- The method modifies the SOP state of the received optical signal to be convenient for clock extraction. The SOP tracking algorithm may be realized in a simple manner using an algorithm selecting the best SOP for clock extraction.
- The method uses the combination of feed-back and feed-forward timing recovery that enables large tolerance to the processing delay and parallelization in the presence of large jitter.

The methods described herein may be implemented as software in a Digital Signal Processor (DSP), in a micro-controller or in any other side-processor or as hardware circuit within an application specific integrated circuit (ASIC).

The invention can be implemented in digital electronic circuitry, or in computer hardware, firmware, software, or in combinations thereof.

### BRIEF DESCRIPTION OF THE DRAWINGS

Further embodiments of the invention will be described with respect to the following figures, in which:
Fig. 1 shows a schematic diagram of a method for recovering clock information from a received optical signal according to an implementation form;
Fig. 2 shows a schematic diagram of a Poincaré sphere used for describing polarization states of a received optical signal and modifications of such polarization states according to an implementation form;
Fig. 3 shows a block diagram of a coherent optical receiver according to an implementation form;
Fig. 4 shows a block diagram of a coherent optical receiver with a digital part according to an implementation form;
Fig. 5 shows a block diagram of a CD compensation unit of a coherent optical receiver according to an implementation form;
Fig. 6 shows a block diagram of a coherent optical receiver according to an implementation form;
Fig. 7 shows a diagram illustrating a Gardner timing error detector characteristic (TEDC) function;
Fig. 8 shows a diagram illustrating a CD estimate according to an implementation form;
Fig. 9 shows a flow chart of an SOP estimation algorithm according to an implementation form;
Fig. 10 shows a diagram illustrating SOP parameters tracking of an SOP estimation algorithm according to an implementation form;
Fig. 11 shows a diagram illustrating a timing error detector characteristic function without and with SOP modification according to an implementation form;
Fig. 12 shows a diagram illustrating a timing error detector metric function without SOP tracking;
Fig. 13 shows a diagram illustrating a timing error detector metric function with SOP tracking according to an implementation form;
Fig. 14 shows a diagram illustrating tracking SOP parameters;
Fig. 15 shows a diagram illustrating an output signal of an interpolator in the feed-forward clock recovery part in presence of strong sinusoidal jitter according to an implementation form;
Fig. 16 shows a diagram demonstrating CR robustness in presence of 50 ppm clock offset and strong jitter;
Fig. 17 shows a block diagram of a coherent optical receiver according to an implementation form; and
Fig. 18 shows a block diagram of a coherent optical receiver according to an implementation form.

### DETAILED DESCRIPTION OF EMBODIMENTS OF THE INVENTION

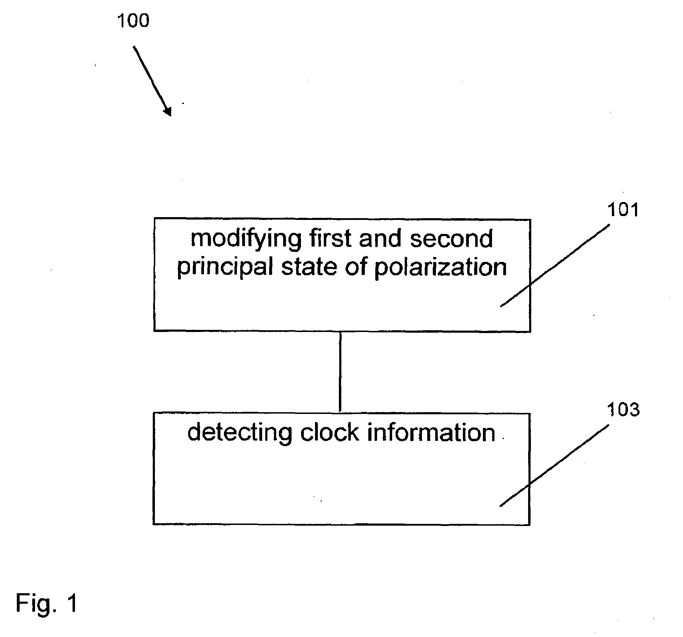

Fig. 1 shows a schematic diagram of a method 100 for recovering clock information from a received optical signal according to an implementation form. The received optical signal has a first (x) and a second (y) principal state of polarization. The method 100 comprises modifying 101 the first and the second principal state of polarization according to an optimization criterion; and detecting 103 the clock information based on the modified first and second principal states of polarization.

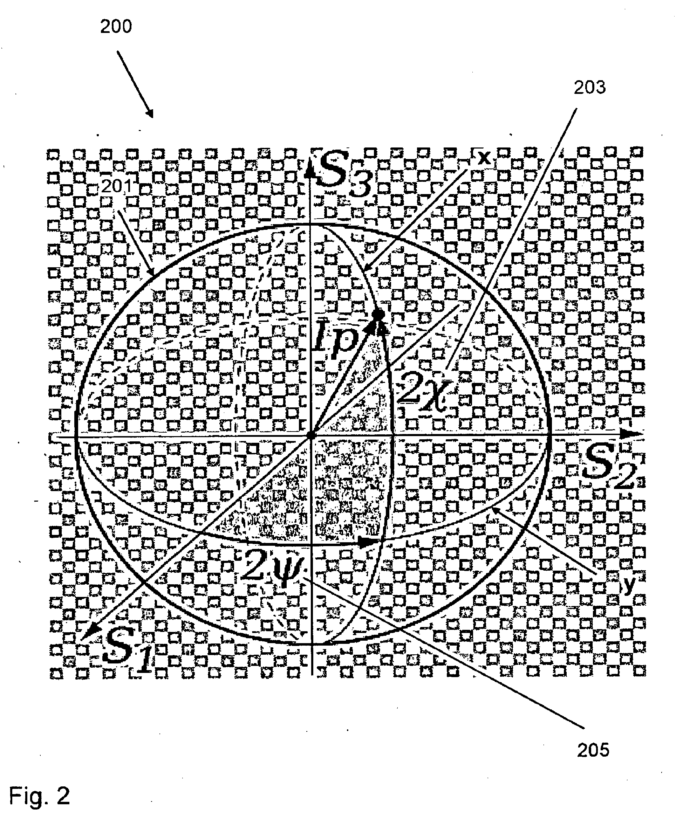

Fig. 2 shows a schematic diagram 200 of a Poincaré sphere 201 used for describing polarization states of a received optical signal and modifications 203, 205 of such polarization states according to an implementation form. Each point at the surface of the sphere 201 with unit radius described by its coordinates S1, S2 and S3 represents one polarization state for fully polarized light. The points at the equator represent linear polarization, the poles represent circular polarization and all other points represent elliptical polarization. So, in Fig. 2, one polarization is any point at the polarization sphere 201. The second polarization is on the opposite side of the sphere 201. If a line is drawn through these two points, the centre of the sphere 201 is on the line. Thus, when the first principal state of polarisation is modified with respect to a rotation by a latitude angle 203 and at the same time modified with respect to a rotation by a longitude angle 205, the second principal state of polarization is straightforwardly found on the opposite side of the sphere 201.

Fig. 3 shows a block diagram of a coherent optical receiver 300 according to an implementation form. The coherent optical receiver 300 comprises an RX analogue part 301 and an RX digital part 303, wherein the RX analogue part 301 comprises an optical path 305 and an electrical path 307. The optical path 305 comprises a local oscillator 309 and a 90°hybrid 315. The electrical path 307 comprises four optical front ends 319, four automatic gain control blocks 321 and four analogue-to-digital converters 329a, 329b, 329c, 329d. The RX digital part 303 comprises a digital signal processing (DSP) block 331 which comprises a fast DSP hardware part 335 and a slow DSP software part 333.

Since the digital signal is mapped into both polarization the 90°hybrid 315 is used to mix the input signal, i.e. the received optical signal 312, with the local oscillator (LO, 309) signal 310 that results in four optical output signals 316a, 316b, 316c, 316d, two output signals per polarization, where the output signals 316a and 316b represent the x-polarization part and the output signals 316c and 316d represent the y-polarization part. The optical output signals 316a, 316b, 316c, 316d are converted to electrical signals via the optical front ends (OFE, 319) comprising photo diodes (single PIN or balanced) and a transimpedance amplifier (TIA).

As the signal power may vary over time, the fast automatic gain control blocks (AGC, 321) compensate for signal power variations. There are four AGC blocks 321. In an implementation form, these four AGC blocks 321 are an integral part of OFE blocks 319. In an implementation form of low realization complexity, a first part 323 of the AGC blocks 321 is controlled by one control signal which is denoted with VX_{AGC} for X polarization and a second part 325 of the AGC blocks 321 is controlled by one control signal which is denoted with VY_{AGC} for Y polarization as depicted in Fig. 3. In an implementation form, four AGC blocks 321 are controlled by four independent control voltages. The output signals 320a, 320b, 320c and 320d of the AGC blocks 321 are quantized by the use of the corresponding analogue-to-digital converter (ADC, 329a, 329b, 329c, 329d) obtaining four quantized digital data streams XI 322a, XQ 322b, YI 322c and YQ 322d.

The four quantized digital data streams XI 322a, XQ 322b, YI 322c and YQ 322d.are further processed in the digital signal processing block or circuit 331 that is divided into two parts, the fast DSP hardware part 335 and the slow DSP software part 333. In the DSP block 331, compensation for chromatic dispersion, polarization mode dispersion, polarization rotation, nonlinear effects, LO noise, LO frequency offset, etc. is performed. Estimation of slow processes, such as rough LO frequency offset, CD etc. is done in the software part 333 of the DSP circuit 331. In the fast DSP hardware part 335, the methods according to aspects of the invention, as described with respect to Fig. 1 and Fig. 2 and as will be described in more detail in the following, are performed

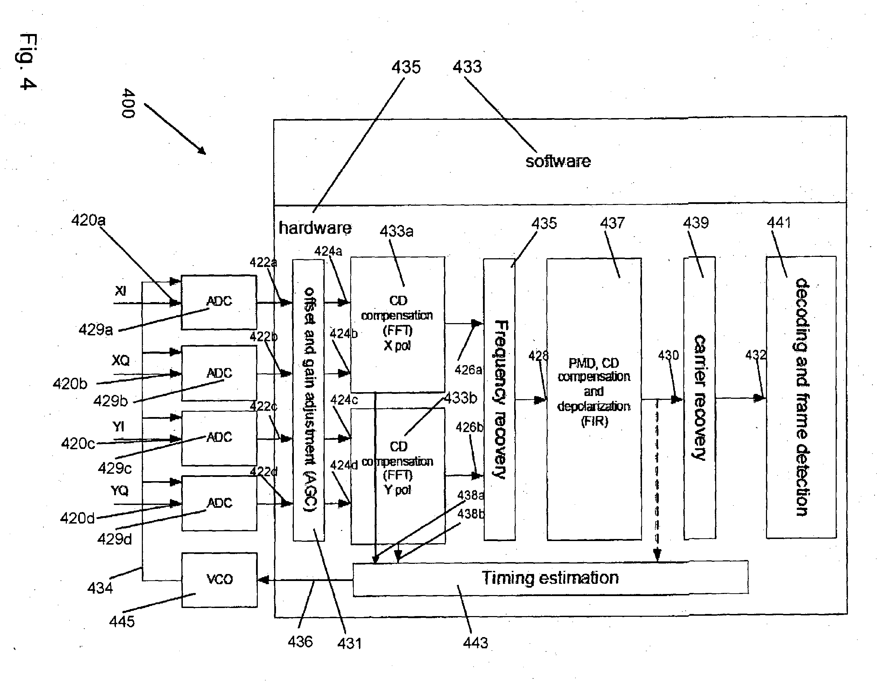

Fig. 4 shows a block diagram of a coherent optical receiver 400 with a DSP hardware part 435 and a DSP software part 433 according to an implementation form. The DSP hardware part 435 may correspond to the DSP hardware part 335 as described with respect to Fig. 3. The DSP software part 433 may correspond to the DSP software part 333 as described with respect to Fig. 3. The coherent optical receiver 400 further comprises four analogue-to-digital converters 429a, 429b, 429c and 429d which may correspond to the four analogue-to-digital converters 329a, 329b, 329c and 329d as described with respect to Fig. 3. The output signals 420a, 420b, 420c and 420d of the AGC blocks not depicted in Fig. 4 are quantized by the use of the corresponding analogue-to-digital converter 429a, 429b, 429c, 429d obtaining four quantized digital data streams 422a, 422b, 422c and 422d which are inputs to an offset and gain adjustment unit 431.

The basic DSP blocks are presented in Fig. 4. After offset and gain correction in the offset and gain adjustment unit 431 the obtained four signals 424a, 424b, 424c and 424d are equalized for chromatic dispersion in frequency domain using two fast Fourier transformation (FFT) equalizing units 433a and 433b, a first FFT equalizing unit 433a is used for equalizing the X polarization comprising the first two signals 424a and 424b and a second FFT equalizing unit 433b is used for equalizing the Y polarization comprising the second two signals 424c and 424d. The first FFT block 433a provides a CD-equalized signal 426a with respect to X-polarization and the second FFT block 433b provides a CD-equalized signal 426b with respect to Y-polarization. The frequency offset is removed in a frequency recovery block 435 receiving the CD-equalized signal 426a with respect to X-polarization and receiving the CD-equalized signal 426b with respect to Y-polarization.

Polarization tracking, PMD compensation and residual CD compensation are done in time domain using finite impulse response (FIR) filters 437 arranged in butterfly structure. The FIR filters 437 receive the output of the frequency recovery block 435 and provide an output signal 430 which is input to a carrier recovery unit 439. Both residual frequency offset and carrier phase recovery are done in the carrier recovery unit 439. When differential decoding is applied at the transmitter side, a differential decoder is used in a decoding and frame detection unit 441 which receives the output signal 432 of the carrier recovery unit 439.

A timing estimation unit 443 receives the output signal 430 of the FIR filters 437, a first control signal 438a of the first FFT block 433a and a second control signal 438b of the second FFT block 433b and provides a timing signal 436 to a voltage controlled oscillator (VCO, 445) providing the clock signals 434 for the four analogue-to-digital converters 429a, 429b, 429c and 429d.

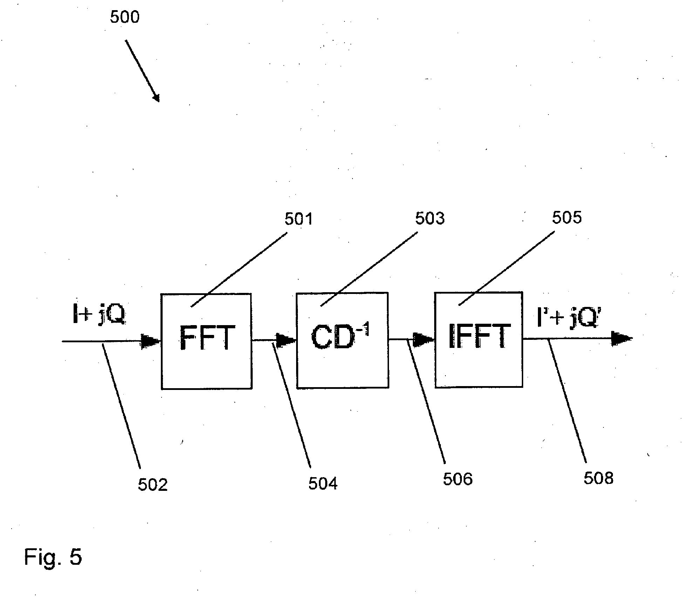

Fig. 5 shows a block diagram of a CD compensation unit 500 of a coherent optical receiver according to an implementation form. The CD compensation unit 500 may correspond to the first FFT equalizing unit 433a used for equalizing the X-polarization or to the second FFT equalizing unit 433b used for equalizing the Y-polarization as described with respect to Fig. 4. The CD compensation unit 500 comprises an FFT unit 501 for transforming an input signal 502 into frequency domain 504, an inverse CD function block 503 for applying an inverse CD function to the frequency-transformed input signal 504 and an IFFT unit 505 for retransforming the output signal 506 of the inverse CD function block into time domain 508.

CD is efficiently compensated in FFT blocks 501 and 505. In an implementation form, the compensation CD function is $C ⁢ {D}^{- 1} \left(DL\right) = exp \left(-j⁢{\left(\frac{2 ⁢ π n {f}_{s}}{N}\right)}^{2}⁢\frac{{λ}_{0}^{2} ⁢ D L}{4 ⁢ π c}\right)$
where λ₀ is the signal wavelength, *f*ₛ is the sampling frequency, N is the FFT size, c is the speed of light, n is the tap number, L is fibre length, and D is dispersion coefficient.

Due to complexity reasons, in an implementation form only one FFT block 501 using complex input is applied to each polarization as can be seen from Fig. 5. In an implementation form, the inverse FFT (IFFT) of the FFT unit 505 is identical to the FFT of the FFT unit 501 although real and imaginary parts are swapped at input and output.

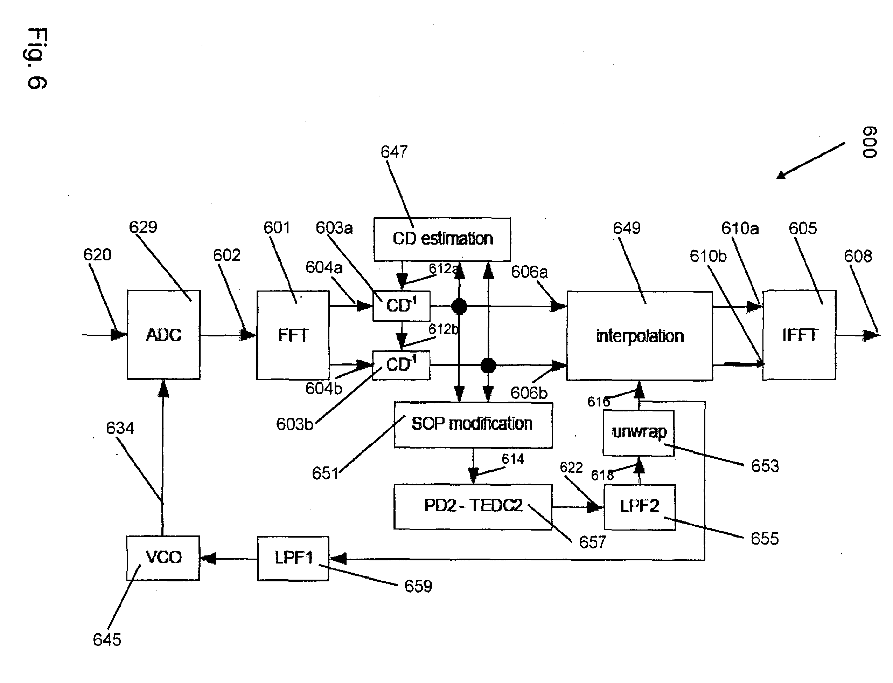

Fig. 6 shows a block diagram of a coherent optical receiver 600 according to an implementation form. The coherent optical receiver 600 comprises an ADC unit 629, a FFT unit 601, an X-polarisation CD compensation unit 603a, a Y-polarisation CD compensation unit 603b, a CD estimating unit 647, a SOP modification unit 651, an interpolation unit 649, an IFFT unit 605, an unwrap unit 653, a phase detector 657, a first low pass filter 659, a second low-pass filter 655 and a VCO 645. The ADC unit 629 receives an analog input signal 620 and provides a digital output signal 602. The FFT unit 601 transforms the digital output signal 602 into frequency-domain 604 providing an in-phase component signal 604a and a quadrature component signal 604b. In Fig. 6 only one ADC unit 629 is depicted for simplicity reasons. The structure of the coherent optical receiver 600 may be similar to the structure of the coherent optical receiver 400 described with respect to Fig. 4, i.e. having four ADC units, a respective one for X and Y polarizations and for inphase and quadrature components.

The in-phase component signal 604a and the quadrature component signal 604b are input signals for the CD estimating unit 647, the SOP modification unit 651 and the interpolation unit 649. The interpolation unit 649 interpolates the in-phase component signal 604a and the quadrature component signal 604b and provides two respective interpolated signal 610a, 610b which are input to the IFFT unit 605 performing the inverse FFT on the interpolated signal 610a, 610b to obtain a time-domain output signal 608. The interpolation unit 649 is controlled by an output signal 616 of the unwrap unit 653 which is unwrapping a signal 618 provided by the second low pass filter 655 which is a low-pass filtered version of an output signal 622 of the second phase detector 657 which receives the output signal 614 of the SOP modification unit 651 and detects a phase therefrom. The X-polarisation CD compensation unit 603a is controlled by a first control signal 612a from the CD estimation unit 647. The Y-polarisation CD compensation unit 603b is controlled by a second control signal 612b from the CD estimation unit 647. The first low-pass filter 659 low-pass filters the output signal 616 of the unwrap unit 653 and provides it to the VCO 645 which uses that signal for generating a clock signal 634 for controlling the sampling clock of the ADC 629.

In digital communication systems, the heart of each receiver is a clock recovery circuit that extracts frequency and phase from incoming data and forces a local clock source to control the sampling rate and the sampling phase of the ADC. The second feature is not too important in over-sampled systems, as data processing blocks are less sensitive to the sampling phase.

Several phase detectors have been proposed for digital systems. Some of them are frequently used in practical systems. For all phase detectors a timing error detector characteristic, e.g. the phase detector output over symbol interval, is very similar to the sinusoidal function. The Mueller and Müller phase detector according to "K. H. Mueller and M. Muller, Transaction on Comm. 24, 516-531 (1976)" works with one sample per symbol. Other phase detectors are used with two-fold oversampling. The Gardner phase detector timing error detector characteristic function according to "F. Gardner, Transaction on Comm. 34, 423-429 (1986)" can be described for complex signals as: $TEDC \left(τ\right) = E ⁢ \left[real⁢\left(x⁢\left(kT-T/2+τ\right)⁢\left(x*\left(kT+τ\right)-x*\left(kT-T+τ\right)\right)\right)\right]$
where Tis the symbol interval, x is the input signal, τ is the sampling instant (between 0 and *T*), E is the expectation, and * denotes complex conjugate operation. The Godard phase detector according to "D. Godard, Transaction on Comm. 26, 517-523 (1978)" can be easily translated in FFT domain as $TEDC \left(τ\right) = E ⁢ \left[imag⁢\left({\sum }_{k = 0}^{N / 2 - 1} X\left(k\right)⁢X*\left(N/2+k\right)\right)\right]$
where *N* is the size of the FFT transform and *X* is the FFT of *x*(*kT*/2+τ)), *k*=0,1, .. *N*-1. The received signal is oversampled by two samples per symbol.

The coherent optical receiver 600 is used for compensating chromatic dispersion and polarization mode dispersion as the effect of CD and PMD is a limiting factor for clock recovery. Therefore, these effects are compensated before clock extraction. Large CD can be effectively compensated in frequency domain. As for PMD, the state of polarization and differential group delay limits the clock information. The following description explains the functionality of the coherent optical receiver 600.

Two principal states of polarizations are denoted as x and *y*. Then, the first order PMD transfer function is described as $H \left(jω\right) = \left[\begin{matrix}cos θ & - sin θ \\ sin θ & cos θ\end{matrix}\right] ⋅ \left[\begin{matrix}exp \left(jω\frac{{τ}_{D G D}}{2}\right) & 0 \\ 0 & exp \left(jω\frac{{τ}_{D G D}}{2}\right)\end{matrix}\right] ⋅ \left[\begin{matrix}cos θ & sin θ \\ - sin θ & cos θ\end{matrix}\right]$
where τ_{DGD} denotes DGD and angle θ represents PMD angle (first SOP angle, corresponding to ψ in Fig. 2). This function multiplies a vector [*X Y*]^{T} (*X* and *Y* corresponds to FFT of x and y, respectively). Very critical case for clock recovery is a first-order PMD with parameters τ_{DGD}=*T*/2 and θ=45°. In this case, the clock information completely disappears. According to aspects of the invention, the clock information is improved by controlling the state of polarization. First, the SOP parameters are estimated and in the following, a simple SOP derotation improves significantly the clock information.

Beside the aforementioned first-order PMD critical case, the situation becomes much worse when after adding the PMD the signal suffers from additional SOP changing, both in angle and phase. Such transfer function can be represented as: $R = \left[\begin{matrix}exp \left(-jφ/2\right) ⁢ cos θ & - exp \left(jφ/2\right) ⁢ sin θ \\ exp \left(-jφ/2\right) ⁢ sin θ & exp \left(jφ/2\right) ⁢ cos θ\end{matrix}\right]$

Any SOP can be represented by Poincare sphere with Stoke's vectors *S*₁, *S*₂, and *S*₃ as depicted in Fig. 2, where θ=ψ (angle-angle of longitude-azimuth) and ψ=χ(phase-angle of latitude-ellipticity). Clock information also suffers when phase ϕ varies from 0 to 90°. Especially for ϕ=90° clock information diminishes.

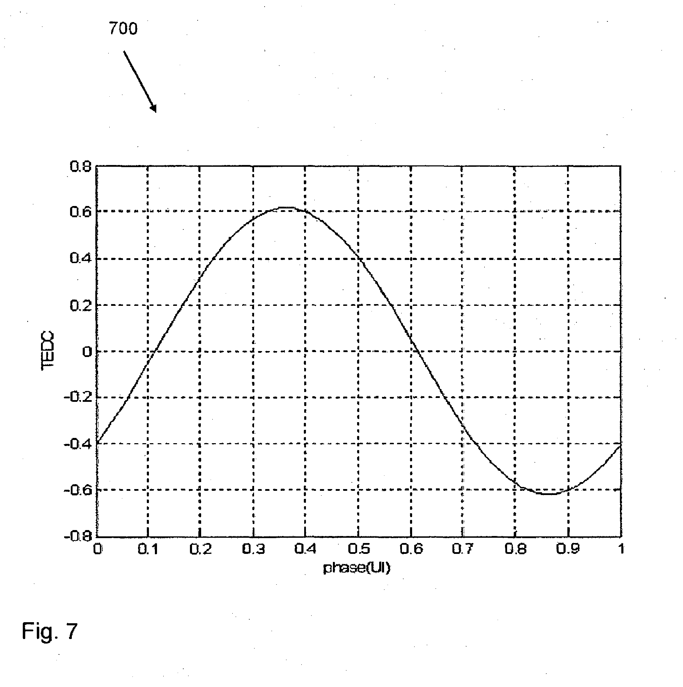

Fig. 7 shows a diagram illustrating a Gardner timing error detector characteristic function. The TEDC of the Gardner phase detector as described by (1) is shown in Fig. 7. Most phase detectors have a similar timing error detector characteristic function. According to implementation forms, the TEDC function is approximated by a sinusoidal function as follows: $TEDC \left(τ\right) = A sin \left(τ+ψ\right)$
where the second angle is just a phase shift. When the quality of timing information or also called the timing error detector metric is defined as $TEDM \left(τ\right) = {TEDC}^{2} \left(τ\right) + {TEDC}^{2} ⁢ \left(τ+π/4\right)$ $TEDM \left(τ\right) = {A}^{2} ⁢ \left({sin}^{2}⁢\left(τ+ψ\right)+{cos}^{2}⁢\left(τ+ψ\right)\right) = {A}^{2}$
the TEDM function does not depend on the current sampling phase when the TEDC function is sinusoidally approximated. Also, the TEDM function is not influenced by the clock recovery state, i.e. the clock recovery needs not to be in tracking phase. So, it is not necessary to lock the VCO to the received data clock for TEDM estimation.

Of course, since sinusoidal approximation is applied and the TEDC maximum value (A) varies over time, the estimations may be averaged to get a more accurate value for the TEDM function.

In an implementation form, the two phase detectors in frequency domain are defined by two TEDC functions as follows: $\begin{matrix}TEDC ⁢ 1 \left(τ\right) = E ⁢ \left[imag⁢\left({\sum }_{k = 0}^{N / 2 - 1} X\left(k\right)⁢X*\left(N/2+k\right)\right)\right] \\ TEDC ⁢ 2 \left(τ\right) = E ⁢ \left[angle⁢\left({\sum }_{k = 0}^{N / 2 - 1} X\left(k\right)⁢X*\left(N/2+k\right)\right)\right] \\ \end{matrix}$

The TEDC1 has sinusoidal shape while the TEDC2 is a linear function from -2π to 2π. The sum limits in (6) can be smaller. In an implementation form only N/4 coefficients are used. In an implementation form, the TEDM is calculated as $TEDM = pow ⁢ \left(E⁢\left[\left({\sum }_{k = 0}^{N / 2 - 1} X\left(k\right)⁢X*\left(N/2+k\right)\right)\right]\right) = pow ⁢ \left(a+jb\right) = {a}^{2} + {b}^{2}$

Let us define vector F and CD cost function as: $\begin{matrix}F = B ⁢ {S}^{T} \\ F = {\left({F}_{1 }⁢{F}_{2 }⁢{F}_{3}\right)}^{T} \\ S = \left(FX FY\right) = \left(fft\left(x\right) fft \left(y\right)\right) \\ B = \left(\begin{matrix}{b}_{11} & {b}_{12} \\ {b}_{21} & {b}_{22} \\ {b}_{31} & {b}_{32}\end{matrix}\right) = \left(\begin{matrix}1 & 0 \\ cos \left(π/4\right) & exp \left(-jπ/4\right) ⁢ sin \left(π/4\right) \\ cos \left(π/4\right) & exp \left(+jπ/4\right) ⁢ sin \left(π/4\right)\end{matrix}\right)\end{matrix}$ and introducing the CD cost function defined by $C F = {\sum }_{i = 1}^{3} TEDM \left({F}_{i}\right)$

Equation (4) can be rewritten in the form $R = \left[\begin{matrix}cos {θ}_{1} & - exp \left(j⁢{φ}_{1}\right) ⁢ sin {θ}_{1} \\ sin {θ}_{1} & exp \left(j⁢{φ}_{1}\right) ⁢ cos {θ}_{1}\end{matrix}\right]$

If before SOP change x and *y* signals are send, the signal *x*' represented by $x ʹ = x cos {θ}_{1} - y exp \left(j{φ}_{1}\right) sin {θ}_{1} = f \left({θ}_{1}, {φ}_{1}\right)$
suffers also from SOP rotation. So, in an implementation form, this signal representation is used for timing information recovery.

The blocks of the coherent optical receiver 600 which are used for timing recovery are shown in Fig. 6. In an implementation form, acquiring data clock is achieved in the four steps:
- CD estimation and compensation,
- SOP adjustment,
- VCO control and
- Interpolation.

The CD estimation is realized by using equations (8) and (9). The frequency domain CD compensation is realized by a multiplication of the signal and the inverse CD function. SOP adjustment and tracking is done by the use of (11) that will be explained below. When the first two steps are done, the timing error characteristic (TEDC2) function of the second phase detector 657 is derived and filtered by the low-pass filter 655 (LPF2). This signal is thereafter unwrapped by the unwrap unit 653 and used in the next two steps. The unwrapped signal 616 is filtered by the first low-pass filter 659 (LPF1) and sent to the VCO 645 that samples the received signal 620 in the ADC 629. Since the data includes timing jitter the interpolation unit 649 solves sampling phase problem caused by data processing delay.

The VCO 645 and the first low-pass filter 659 are realized in analog domain. The second low-pass filter 655 is a part of the digital signal processing. In an implementation form it is an IIR filter. The Cut-off frequency of the second low-pass filter 655 is much higher than that of the first low-pass filter, e.g. about 100 times.

An unwrap function in the unwrap unit 653 is required since the second phase detector 657 delivers a periodical function with a transient of 4π.

The unwrapping function extends the jitter tracking range and solves wrapping problems since an atan function is used in the second phase detector 657 (cf. TEDC2 of equation (6)). When denoting the output of the second phase detector 657 by "TED", then the unwrapping can be described in MATLAB language as follows:

```
 delta=TED-T0;
 if delta >= pi
   delta=delta-2*pi;
   elseif delta < -pi
    delta=delta+2*pi;
    end
    T1=T0+delta;
    if abs(T1)>=LM
   T1=sign(T1)*LM;
   T0=0;
   else
  T0=T1;
  end
```

The variable T0 is initialized by 0. The unwrapping range is ±LM. The parameter T1 is used in the interpolation unit 649 doing interpolation in frequency domain as $X = fft \left(x\right) ⁢ exp \left(-{jfT}_{1}\right)$
where f denotes the frequency scale (N FFT points).

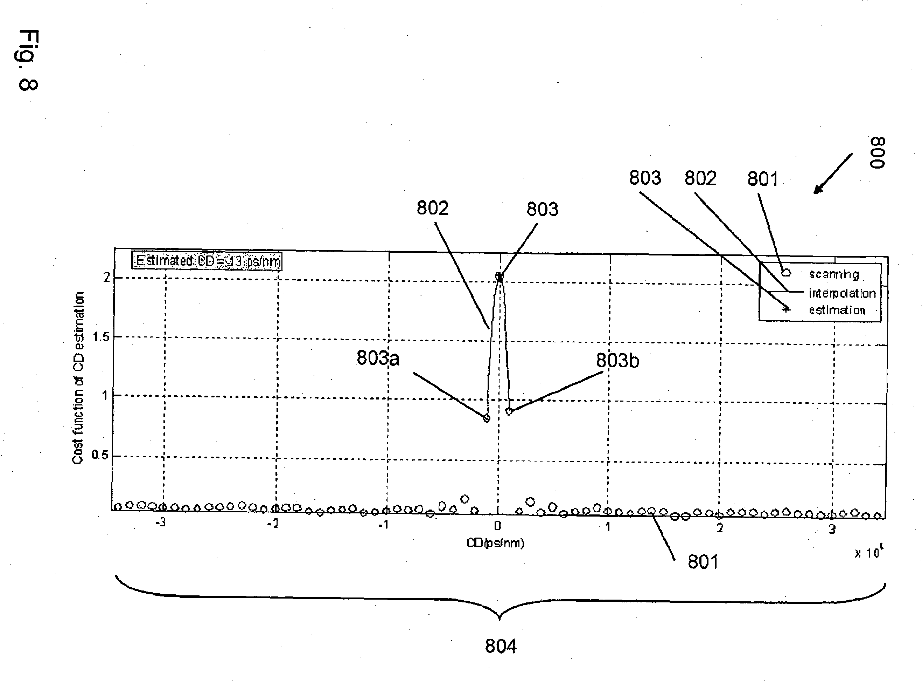

Fig. 8 shows a diagram 800 illustrating a chromatic distortion (CD) estimate 803 according to an implementation form. In an implementation form, the chromatic distortion estimation is performed in the following steps:
1. Selecting chromatic distortion scanning range 804 and chromatic distortion scanning step size 801;
2. Selecting sum limits in the equation (7) as described above;
3. Scanning over the selected chromatic distortion scanning range 804 and calculating the cost function (CF) by using the equation (9) as described above;
4. Selecting the best estimation 803 and at least two points 803a,803b around it;
5. Determining an interpolated scanning curve from the best estimation 803 and the at least two points 803a, 803b around it by using an interpolation function 802 and estimating a maximum of the interpolated scanning curve;
6. Locating maxima of the interpolated scanning curve providing the estimated chromatic distortion value; and optionally
7. Estimating a residual chromatic distortion estimation error by using a smaller chromatic distortion scanning step size for locating exact positions of the maxima of the cost function. In an implementation form, the smaller scanning step size is 10 ps/nm. When using the smaller CD scanning step size, the estimated CD value is closer to the true CD value than the originally estimated CD value estimated by using the greater CD scanning step size 801.

In an implementation form, a CD scanning step size 801 of 1000 ps/nm and a filtering window size, i.e. a scanning range 804 of 40 is selected and a 112 DP-QPSK modulation is used. This assures that the three best estimations 803, 803a, 803b lie on the curve that can be approximated by a second-order polynomial 802. From Fig. 8 it can be seen that the estimated value is 13 ps/nm. Fig. 8 also shows the estimated error. The second-order polynomial 802 between these three best estimation points 803, 803a, 803b is also presented in Fig. 8. Using this procedure decreases the estimation time several times, in particular more than 10 times, which depends on the scanning step size 801, the window size 804 and the interpolation function 802.

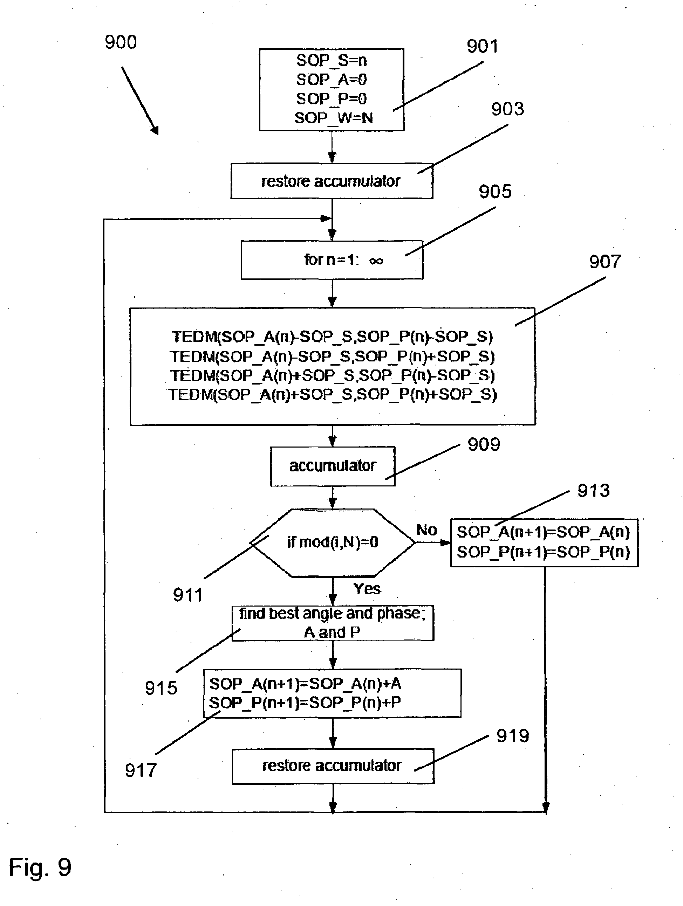

Fig. 9 shows a flow chart of an SOP estimation algorithm 900 according to an implementation form. In a first block 901 SOP parameters are defined. In a further block 903, an accumulator is restored. In a next block 905, an open loop is started. In a next block 907, four variations of the timing error detector metric function are determined. In a next block 909, an accumulator accumulates the four variations of the TEDM function. In a next block 911, a mod function of i and N is determined. If the output of the mod function is not equal to zero, block 913 is performed, where the next SOP angle is set to the previous SOP angle and the next SOP phase is set to the previous SOP phase and the loop 905 is incremented. If the output of the mod function is equal to zero, block 915 is performed for finding best angle A and phase P. In a next block 917, the next SOP angle is set to the previous SOP angle plus the found best angle A and the next SOP phase is set to the previous SOP phase plus the found best phase P. In a next step 919 the accumulator is restored and the loop 905 is incremented.

Since data processing is done in blocks, one TEDM value comes out after one data block. TEDM value variations depend on the number of data blocks. To improve TEDM estimation, in an implementation form, more values are averaged. The SOP is characterized according to the flow chart depicted in Fig. 9.

The SOP angle (SOP_A) is changed after N data blocks by windowing and/or averaging. In a first block 901, the SOP angle and the SOP phase (SOP_P) are increased or decreased by a number of n degrees which is denoted by SOP_S. There are four combinations that are averaged over *N* data blocks using an accumulator. After the SOP estimation, the best angle and phase combination is selected. The SOP increment SOP_S may be set to 1° or less depending on the maximum SOP changes (supposed not to cross 30 kHz). In normal conditions SOP variations are very small such that SOP_S may be set less than 1 degree.

The described method always finds the correct SOP angle in presence of differential group delay (DGD) being different from zero. When the differential group delay is zero, the SOP angle may vary freely and does not influence the clock recovery performance.

To calculate sine and cosine of the SOP parameters a look-up-table (LUT) is used. In an implementation form, the LUT covers angles from 0 to 90°. In an implementation form, the SOP angle is monitored from 0 to 360°. When it crosses 360°, in an implementation form, the angle is decreased by 360°, and when it becomes negative, in an implementation form, 360° is added to the current value. In an implementation form, a tracking of the angle quadrant and LUT from 0 to 90° is performed which has shown to be sufficient for SOP tracking.

In summary, the algorithm 900 calculates four timing error detection metrics and selects the best one of the four following modifications +/-Δθ and +/-ΔΦ of the longitude angle θ and the latitude angle Φ: $\left(θ+Δθ;φ+Δφ\right)$ $\left(θ+Δθ;φ-Δφ\right)$ $\left(θ-Δθ;φ+Δφ\right)$ $\left(θ-Δθ;φ-Δφ\right)$

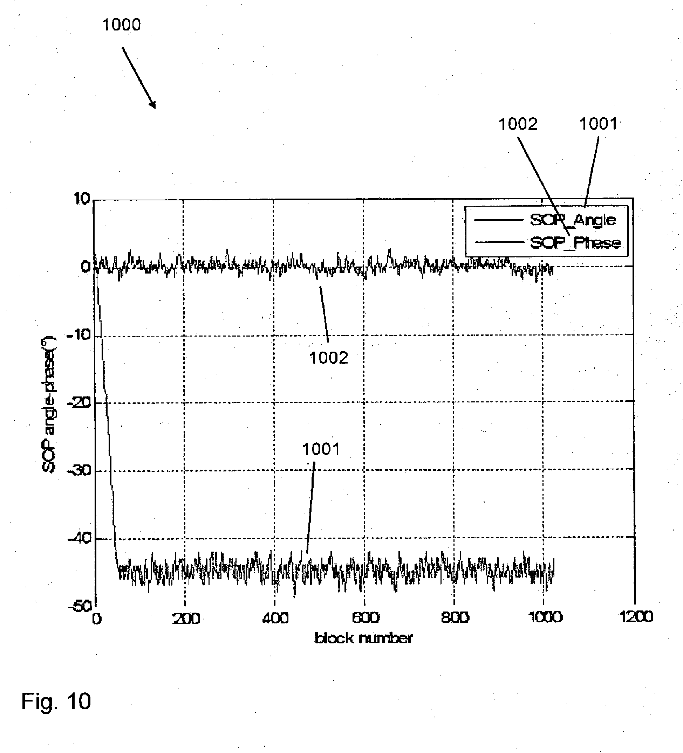

Fig. 10 shows a diagram 1000 illustrating SOP parameters tracking of an SOP estimation algorithm according to an implementation form. The diagram 1000 simulates 112 Gb/s PDM-QPSK (28 GBaud/s) transmission. The first-order PMD with parameters θ=45° and τ_{DGD}=*T*/2=17.86 ps was added. The angle increment was set to 1° and TEDM was not averaged. The SOP parameters tracking over data blocks consisting of 256 symbols are presented in Fig. 10. The control loop acquires SOP angle 1001. of -45°after 60 FFT blocks. SOP phase 1002 of 0 degree is acquired from the first FFT block. Fig. 10 shows angle variations of approximately ±3°. These variations do not harm clock recovery performance and the performance of the receiver. They are almost the same like performance without variations in the clock recovery block.

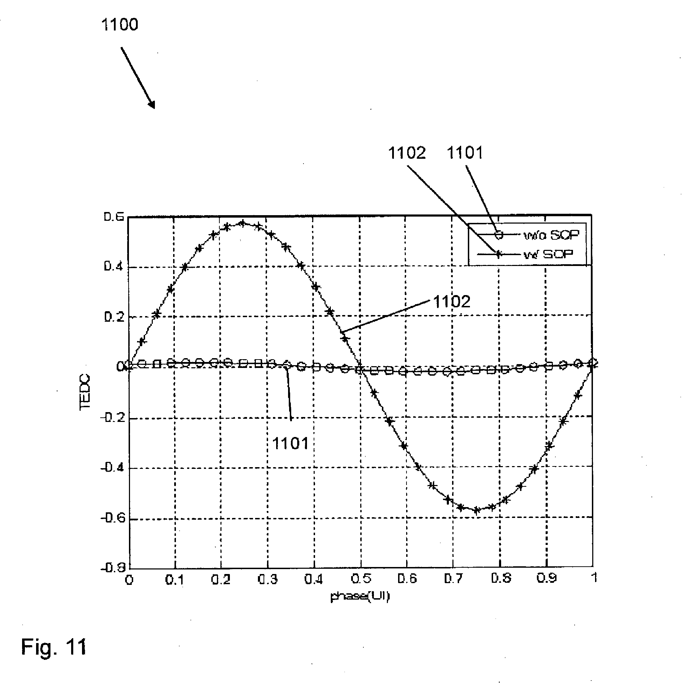

Fig. 11 shows a diagram 1100 illustrating a timing error detector characteristic function without 1101 and with 1102 SOP modification according to an implementation form.

The TEDC curves with 1102 and without 1101 SOP tracking are shown in Fig. 11. With SOP tracking 1102 the clock performance is similar to a back-to-back (B2B) performance. Without SOP tracking 1101 it has shown to be impossible to lock VCO to data due to small timing information resulting in high clock jitter.

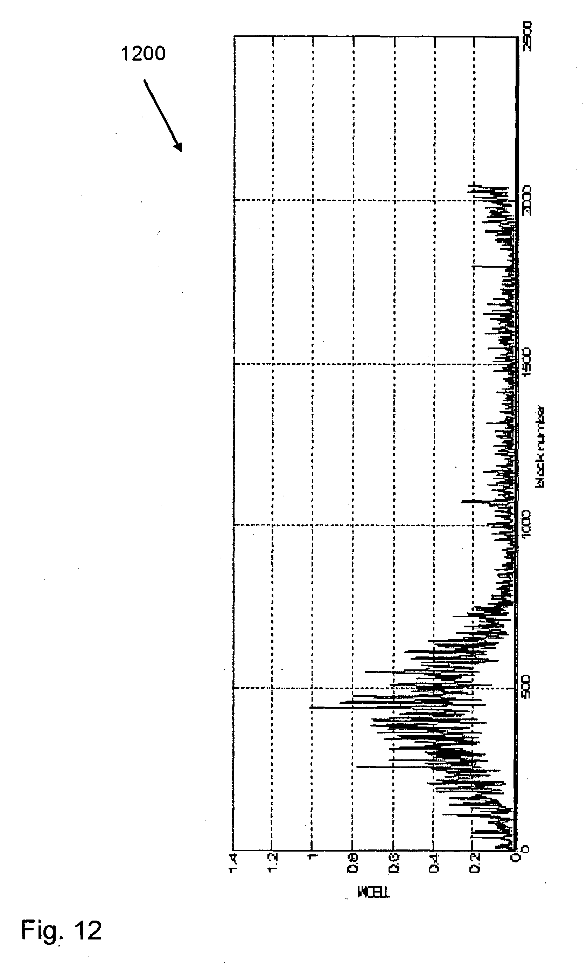

Fig. 12 shows a diagram 1200 illustrating a timing error detector metric function without SOP tracking. The critical first-order PMD with 30 kHz SOP angle and 20 kHz SOP phase rotation is depicted. It can be seen that timing information diminishes over time.

Fig. 13 shows a diagram 1300 illustrating a timing error detector metric function with SOP tracking according to an implementation form. With SOP tracking, timing information is never close to zero. The bit error rate (BER) performance with ideal timing recovery and with the proposed timing recovery are identical. Fig. 13 shows that TEDM variations are quite normal in real communication world. SOP parameter variations do not have to follow real SOP parameter values. They simply maximize the timing information.

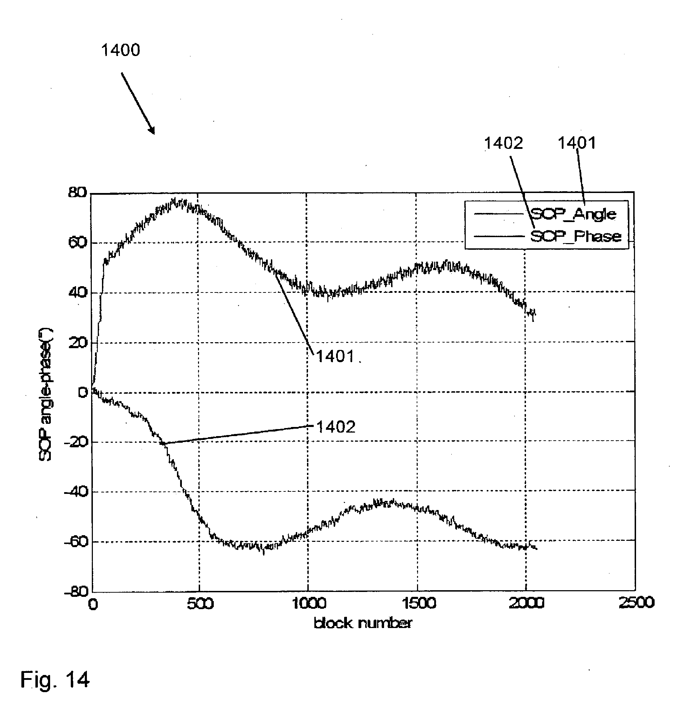

Fig. 14 shows a diagram 1400 illustrating tracking SOP parameter variations, i.e. variations of SOP angle 1401 and SOP phase 1402. Tracking SOP parameters with the presented algorithm described with respect to Fig. 9 without penalty is shown. Sinusoidal variations of 30 kHz in SOP angle and 20 kHz in phase were introduced. The figure shows SOP angle and phase estimations (tracking). They are not sinusoidal. Nevertheless, it is enough to get a good clock signal. So, it is not required to estimate the exact SOP angle and phase. It has been found that a combination of angle and phase delivers a good clock signal.

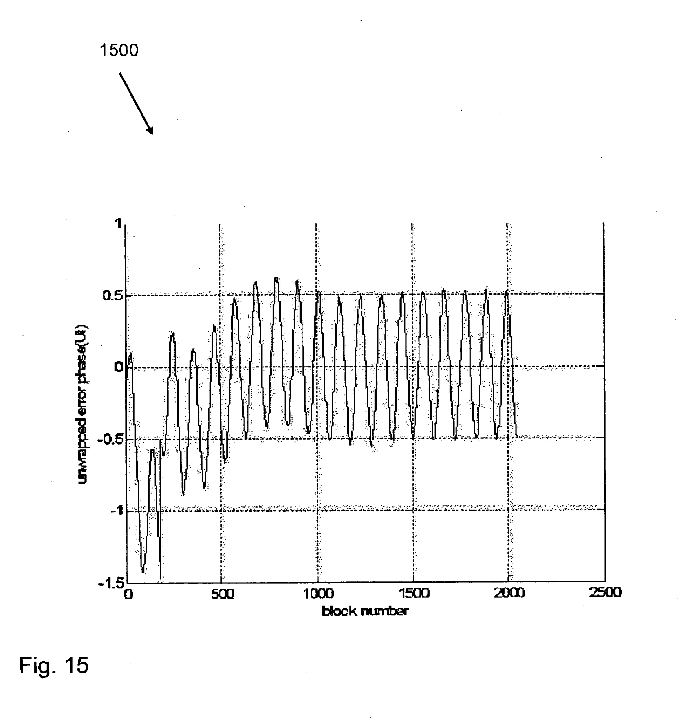

Fig. 15 shows a diagram 1500 illustrating an output signal of an interpolator in the feed-forward clock recovery part in presence of strong sinusoidal jitter according to an implementation form. The interpolator follows the sinusoidal jitter. The diagram 1500 illustrates a sinusoidal jitter of 1 MHz with 1 Ulpp. Additionally, a 50ppm clock offset is added. Since FFT block generates several thousands symbols delay for clock recovery without interpolation in the feed-forward clock recovery part, the system fails. The VCO loop was set to 100 kHz. Varying the loop bandwidth does not solve the problem but including the interpolator solves the jitter problem. In Fig. 15, the output signal of the interpolator is presented. After an acquisition period of 1500 blocks the interpolator tracks the input jitter.

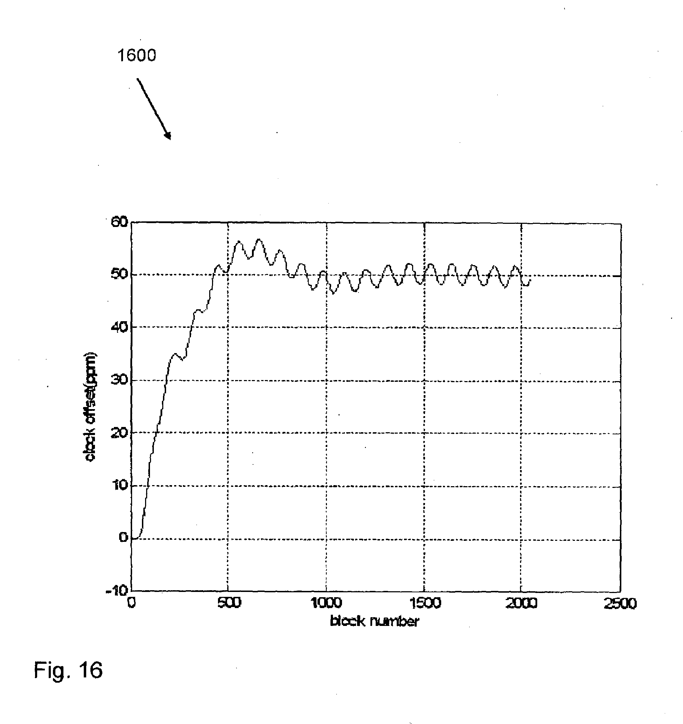

Fig. 16 shows a diagram demonstrating CR robustness in presence of 50 ppm clock offset and strong jitter. An averaged output is exactly 50 ppm that is compensated in the VCO. Fig. 16 presents the frequency clock tracking in the VCO. The mean offset after an acquisition period is 50ppm as expected. Due to the interpolator the signal quality, i.e. a low BER, is achieved after 300 blocks since there is no need to wait until all circuits are in tracking phase. It is sufficient that the unwrapped error phase does not experience rapid step changes indicating a fail of the unwrap function.

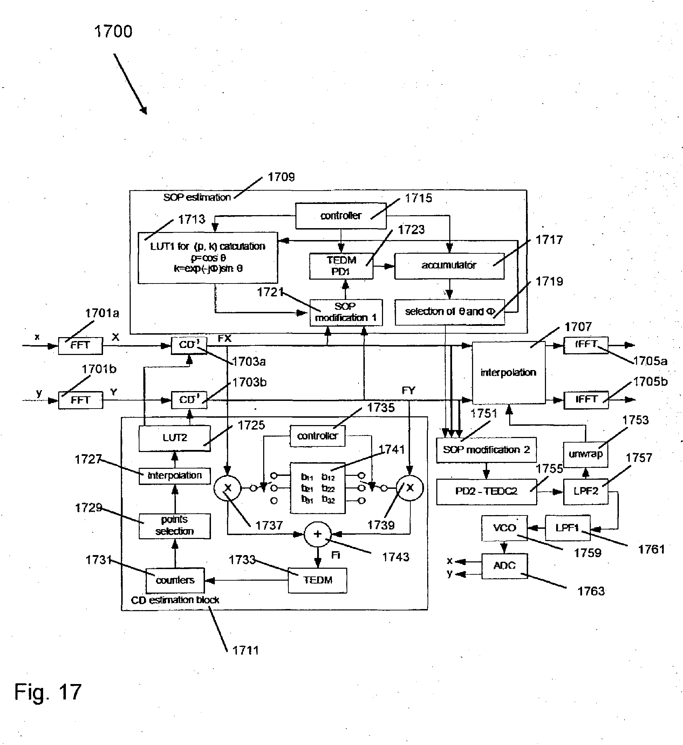

Fig. 17 shows a block diagram of a coherent optical receiver 1700 according to an implementation form.

At an input of the coherent optical receiver 1700 an analogue X-polarization signal x and an analogue Y-polarization signal y is received. The X-polarization signal x is transformed by a first FFT unit 1701a to a frequency-domain X-polarization signal X and the Y-polarization signal y is transformed by a second FFT unit 1701b to a frequency-domain Y-polarization signal Y. X is CD-compensated by a first CD compensator 1703a obtaining an output signal FX in frequency-domain and Y is CD-compensated by a second CD compensator 1703b obtaining an output signal FY in frequency-domain. Both signals FX and FY are provided to an interpolator 1707 generating X-polarization and Y-polarization output signals. The X-polarization output signal is transformed to time-domain by a first IFFT unit 1705a and the Y-polarization output signal is transformed to time-domain by a second IFFT unit 1705b.

The signals FX and FY are used for adjusting an SOP estimation unit 1709; both signals FX and FY are provided to a first SOP modification unit 1721 which is controlled by an output of a first look-up table 1713 to provide the SOP modification for a first TEDM phase detector 1723. A controller 1715 controls the first look-up table 1713, the first TEDM phase detector 1723 and an accumulator 1717 accumulating the TEMD value provided by the first TEDM phase detector 1723. An output of the accumulator 1717 is used for selection of the longitude angle θ and the latitude angle θ by a selection unit 1719 which are provided to a second SOP modification unit 1751.

The coherent optical receiver 1700 further comprises an ADC unit 1763, an unwrap unit 1753, a second phase detector 1755, a first low pass filter 1761, a second low-pass filter 1757 and a VCO 1759. The interpolation unit 1707 is controlled by an output signal of the unwrap unit 1753 which is unwrapping a signal provided by the second low pass filter 1757 which is a low-pass filtered version of an output signal of the second phase detector 1755 which receives the output signal of the second SOP modification unit 1751 and detects a phase therefrom.

A CD compensation unit 1711 uses the frequency signals FX and FY which are multiplied in a matrix multiplier by B-matrix multiplication coefficients b₁₁, b₁₂, b₂₁, b₂₂, b₃₁, b₃₂. The matrix multiplier comprises two coefficient multipliers 1737 and 1739, an adder 1743, a B-matrix coefficient table 1741 and a controller 1735. An output Fi of the matrix multiplier is provided to a TEDM function unit 1733. An output of the TEDM function unit 1733 is provided to a counter unit 1731. An output of the counter unit 1731 is provided to a points selection unit 1729. An output of the points selection unit 1729 is provided to a further interpolation unit 1727. An output of the further interpolation unit 1727 is provided to a second look-up table 1725 which provides control signals to the CD compensation units 1703a and 1703b.

The clock recovery of the coherent optical receiver 1700 has a simplified architecture. During CD determination the VCO is locked to the reference clock available from the line card. After CD determination and compensation the clock circuit is activated. Since the SOP tracking is insensitive to the sampling phase and can work with high clock offset there is not any dependency of this circuit on the VCO state. At the same time the SOP tracker 1751 and the second phase detector PD2, 1755 are acquiring the correct data phase and frequency. The second low pass filter LPF2, 1757 can be avoided, but in some cases when data is disturbed by non-linearities it is better to activate the second low pass filter LPF2, 1757 with a cut-off frequency of 0.003 *f*s , where *f*s is the symbol rate.

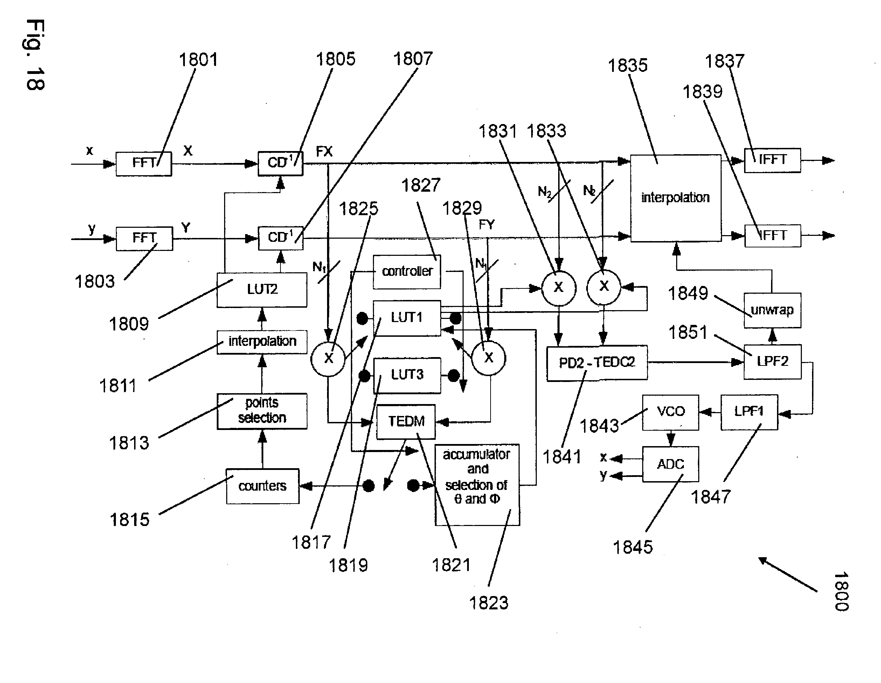

Fig. 18 shows a block diagram of a coherent optical receiver 1800 according to an implementation form. The realization of the coherent optical receiver 1800 is significantly simplified with respect to the coherent optical receiver 1700 described with respect to Fig. 17. The FFT units 1801,1803, the CD compensation units 1805, 1807, the interpolation unit 1835 and the IFFT units 1837, 1839 correspond to the respective units described with respect to Fig. 17. The ADC unit 1845, the VCO 1843, the first 1847 and second 1851 low-pass filter units and the unwrap unit 1849 correspond to the respective units described with respect to Fig. 17. The counters unit 1815, the points selection unit 1813, the further interpolation unit 1811 and the second look-up table unit 1809 correspond to the respective units described with respect to Fig. 17.

The second phase detector 1841 receives two input signals which are obtained by multiplication of the FX signal with a first output of the first look-up table 1817 in a first multiplier 1831 and by multiplication by multiplication of the FX signal with a second output of the first look-up table 1817 in a second multiplier 1833. A controller 1827 is controlling B-matrix multiplication by selecting a first look-up table 1817 or a third look-up table 1819 for the FX signal and the FY signal. The controller 1827 further controls the TEDM unit 1821.

The third look-up table LUT3, 1819 contains the elements of the B matrix. In the beginning, the controller 1827 activates the CD searching engine. During this process the third look-up table LUT3 1819 is active. After CD estimation the controller 1827 activates the first look-up table LUT1 1817 that serves for SOP searching. Only *N*₁ FFT coefficients are used (*N*₁<*N*=FFT size)). The first look-up table LUT1 1817 uses the current SOP state and delivers four different SOP states. The best state is selected for the new SOP state after some averaging period. The clock circuit may use more FFT coefficients. That depends on the application and the channel conditions. During data processing not all blocks are used. CD estimation blocks are disabled after CD determination while SOP control and most clock circuits are off during CD estimation. So, the power consumption cannot only be judged based on the coherent optical receiver 1700 described with respect to Fig. 17 without the knowledge of the clock recovery functioning.

From the foregoing, it will be apparent to those skilled in the art that a variety of methods, systems, computer programs on recording media, and the like, are provided.

The present disclosure also supports a computer program product including computer executable code or computer executable instructions that, when executed, causes at least one computer to execute the performing and computing steps described herein.

The present disclosure also supports a system configured to execute the performing and computing steps described herein.

Many alternatives, modifications, and variations will be apparent to those skilled in the art in light of the above teachings. Of course, those skilled in the art readily recognize that there are numerous applications of the invention beyond those described herein. While the present inventions has been described with reference to one or more particular embodiments, those skilled in the art recognize that many changes may be made thereto without departing from the scope of the present invention. It is therefore to be understood that within the scope of the appended claims the inventions may be practiced otherwise than as specifically described herein.

## Claims

1. Method (100) for recovering clock information from a received optical signal, the received optical signal having a first (x) and a second (y) principal state of polarization, the method comprising:
modifying (101) the first and the second principal state of polarization according to an optimization criterion,
**characterized in that**
the optimization criterion is based on a selection of State of Polarization parameters providing best timing error detector metric, TEDM, wherein the TEDM describes a quality of a timing information being independent on a sampling instant, τ, of the received optical signal; and further **characterized by**
detecting (103) the clock information based on the modified first and second principal states of polarization.

2. The method (100) of claim 1, wherein the modifying comprises: rotating the first (x) and the second (y) principal state of polarization with respect to a latitude angle, ϕ, and a longitude angle, θ, on a Poincaré sphere (201), the Poincaré sphere (201) describing polarization states of the received optical signal.

3. The method (100) of claim 1 or claim 2, wherein the modifying comprises:
transforming the first (x) and the second (y) principal state of polarization into frequency domain obtaining a frequency-transformed first (X) and a frequency-transformed second (Y) principal state of polarization; and
applying a rotation matrix, R, to the frequency-transformed first (X) and the frequency-transformed second (Y) principal state of polarization.

4. The method (100) of claim 1, wherein the timing error detector metric, TEDM, depends on a timing error detector characteristic function, TEDC, the timing error detector characteristic function, TEDC, approximating a sinusoidal function of the sampling instant, τ, of the received optical signal

5. The method (100) of claim 4, wherein the timing error detector metric, TEDM, depends on a time-averaged power of the timing error detector characteristic function, TEDC.

6. The method (100) of one of the preceding claims, further comprising:
providing an estimate of a chromatic dispersion (612a, 612b) of the received optical signal.

7. The method (100) of claim 6, wherein the estimating the chromatic dispersion comprises:
averaging rotated versions of the first (x) and second (y) principal states of polarization by a cost function, CF, the rotation being with respect to a latitude angle, ϕ, and a longitude angle, θ, on the Poincaré sphere.

8. The method (100) of claim 7, wherein a rotation of each of the rotated versions of the first (x) and second (y) principal states of polarization is with respect to a different combination of values for the latitude angle, ϕ, and the longitude angle, θ.

9. The method (100) of claim 7 or claim 8, wherein a rotated version of the first and second principal states of polarization is obtained by
transforming the first (x) and the second (y) principal state of polarization into frequency domain obtaining a frequency-transformed first (X) and a frequency-transformed second (Y) principal state of polarization; and
applying a rotation matrix, B, to the frequency-transformed first (X) and the frequency-transformed second (Y) principal state of polarization.

10. The method (100) of one of claims 7-9, wherein the cost function is based on different modifications, in particular four different modifications, of the first (x) and the second (y) principal state of polarization obtaining corresponding timing error detector metrics, TEDMs, a timing error detector metric, TEDM, describing a quality of a timing information.

11. Computer program product for implementing the method (100) of one of claims 1 to 10.

12. Clock recovery unit (443) for recovering clock information from a received optical signal, the received optical signal having a first (x) and a second (y) principal state of polarization, the clock recovery unit comprising:
a modifier (651) configured to modify the first (x) and the second (y) principal state of polarization according to an optimization criterion,
**characterized in that**
the optimization criterion is based on a selection of State of Polarization parameters providing best timing error detector metric, TEDM, wherein the TEDM describes a quality of a timing information being independent on a sampling instant, τ, of the received optical signal; and further **characterized by**
a detector (657) configured to detect the clock information based on the modified first and second principal states of polarization.

13. Chromatic dispersion estimation unit (1709) for estimating a chromatic dispersion from a received optical signal, the received optical signal having a first (x) and a second (y) principal state of polarization, the chromatic dispersion estimation unit comprising:
an averaging unit (1723) configured to average rotated versions of the first (x) and second (y) principal states of polarization by a cost function, CF, the rotation being with respect to a latitude angle, ϕ, and a longitude angle, θ, on a Poincaré sphere, the Poincaré sphere describing polarization states of the received optical signal,
**characterized in that**
the cost function, CF, being based on different modifications, in particular four different modifications, of the first (x) and the second (y) principal state of polarization obtaining corresponding timing error detector metrics, TEDMs, wherein a timing error detector metric, TEDM, describes a quality of a timing information being independent on a sampling instant, τ, of the received optical signal; and
further **characterized by** comprising a selection unit (1719) configured to select highest values, in particular three highest values, of the cost function and using a polynomial approximation, in particular a second-order polynomial approximation, based on the selected highest values for providing an estimate of the chromatic dispersion as a location of a maximum value of the polynomial approximation.

14. Coherent optical receiver (400, 600, 1700, 1800) for receiving an optical signal, the received optical signal having a first (x) and a second (y) principal state of polarization, the coherent optical receiver (400, 600, 1700, 1800) comprising:
a clock recovery unit (443) according to claim 12;
a chromatic dispersion estimation unit (647, 1709) according to claim 13;
a voltage controlled (645) oscillator which feed-back loop is controlled based on the clock information of the clock recovery unit (443);
an interpolation unit (649) configured to interpolate an optical signal from the received optical signal based on the modified first and second principal states of polarization and based on the estimate of the chromatic dispersion.

## Patentansprüche

1. Verfahren (100) zum Zurückgewinnen von Taktinformationen von einem empfangenen optischen Signal, wobei das empfangene optische Signal einen ersten (x) und einen zweiten (y) Hauptpolarisationszustand aufweist, wobei das Verfahren Folgendes umfasst:
Modifizieren (101) des ersten und des zweiten Hauptpolarisationszustandes gemäß einem Optimierungskriterium,
**dadurch gekennzeichnet, dass**
das Optimierungskriterium auf einer Auswahl von Polarisationszustandsparametern basiert, die die beste Zeitablauffehler-Detektormetrik, TEDM, schaffen, wobei die TEDM eine Qualität von Zeitablaufinformationen beschreibt, die von einem Abtastmoment, τ, des empfangenen optischen Signals unabhängig sind; und ferner **gekennzeichnet ist durch**
Detektieren (103) der Taktinformationen auf der Basis des modifizierten ersten und zweiten Hauptpolarisationszustandes.

2. Verfahren (100) nach Anspruch 1, wobei das Modifizieren Folgendes umfasst:
Drehen des ersten (x) und des zweiten (y) Hauptpolarisationszustandes in Bezug auf einen Breitenwinkel, ϕ, und einen Längenwinkel, θ, auf einer Poincaré-Kugel (201), wobei die Poincaré-Kugel (201) Polarisationszustände des empfangenen optischen Signals beschreibt.

3. Verfahren (100) nach Anspruch 1 oder Anspruch 2, wobei das Modifizieren Folgendes umfasst:
Transformieren des ersten (x) und des zweiten (y) Hauptpolarisationszustandes in den Frequenzbereich, wobei ein frequenztransformierter erster (X) und ein frequenztransformierter zweiter (Y) Hauptpolarisationszustand erhalten werden; und Anwenden einer Rotationsmatrix, R, auf den frequenztransformierten ersten (X) und den frequenztransformierten zweiten (Y) Hauptpolarisationszustand.

4. Verfahren (100) nach Anspruch 1, wobei die Zeitablauffehler-Detektormetrik, TEDM, von einer Zeitablauffehlerdetektor-Charakteristikfunktion, TEDC, abhängt, wobei die Zeitablauffehlerdetektor-Charakteristikfunktion, TEDC, eine Sinusfunktion des Abtastmoments, τ, des empfangenen optischen Signals annähert.

5. Verfahren (100) nach Anspruch 4, wobei die Zeitablauffehler-Detektormetrik, TEDM, von einer zeitlich gemittelten Leistung der Zeitablauffehlerdetektor-Charakteristikfunktion, TEDC, abhängt.

6. Verfahren (100) nach einem der vorangehenden Ansprüche, das ferner Folgendes umfasst:
Vorsehen einer Abschätzung einer chromatischen Dispersion (612a, 612b) des empfangenen optischen Signals.

7. Verfahren (100) nach Anspruch 6, wobei das Abschätzen der chromatischen Dispersion Folgendes umfasst:
Mitteln von gedrehten Versionen des ersten (x) und des zweiten (y) Hauptpolarisationszustandes durch eine Kostenfunktion, CF, wobei die Drehung in Bezug auf einen Breitenwinkel, ϕ, und einen Längenwinkel, θ, auf der Poincare-Kugel stattfindet.

8. Verfahren (100) nach Anspruch 7, wobei eine Drehung von jeder der gedrehten Versionen des ersten (x) und des zweiten (y) Hauptpolarisationszustandes in Bezug auf eine unterschiedliche Kombination von Werten für den Breitenwinkel, ϕ, und den Längenwinkel, θ, stattfindet.

9. Verfahren (100) nach Anspruch 7 oder Anspruch 8, wobei eine gedrehte Version des ersten und des zweiten Hauptpolarisationszustandes erhalten wird durch Transformieren des ersten (x) und des zweiten (y) Hauptpolarisationszustandes in den Frequenzbereich, wobei ein frequenztransformierter erster (X) und ein frequenztransformierter zweiter (Y) Hauptpolarisationszustand erhalten werden; und Anwenden einer Rotationsmatrix, B, auf den frequenztransformierten ersten (X) und den frequenztransformierten zweiten (Y) Hauptpolarisationszustand.

10. Verfahren (100) nach einem der Ansprüche 7-9, wobei die Kostenfunktion auf verschiedenen Modifikationen, insbesondere vier verschiedenen Modifikationen, des ersten (x) und des zweiten (y) Hauptpolarisationszustandes basiert, wobei entsprechende Zeitablauffehler-Detektormetriken, TEDMs, erhalten werden, wobei eine Zeitablauffehler-Detektormetrik, TEDM, eine Qualität von Zeitablaufinformationen beschreibt.

11. Computerprogrammprodukt zum Implementieren des Verfahrens (100) nach einem der Ansprüche 1 bis 10.

12. Taktrückgewinnungseinheit (443) zum Zurückgewinnen von Taktinformationen von einem empfangenen optischen Signal, wobei das empfangene optische Signal einen ersten (x) und einen zweiten (y) Hauptpolarisationszustand aufweist, wobei die Taktrückgewinnungseinheit Folgendes umfasst:
einen Modifizierer (651), der dazu konfiguriert ist, den ersten (x) und den zweiten (y) Hauptpolarisationszustand gemäß einem Optimierungskriterium zu modifizieren,
**dadurch gekennzeichnet, dass**
das Optimierungskriterium auf einer Auswahl von Polarisationszustandsparametern basiert, die die beste Zeitablauffehler-Detektormetrik, TEDM, schaffen, wobei die TEDM eine Qualität von Zeitablaufinformationen beschreibt, die von einem Abtastmoment, τ, des empfangenen optischen Signals unabhängig sind; und ferner **gekennzeichnet ist durch**
einen Detektor (657), der dazu konfiguriert ist, die Taktinformationen auf der Basis des modifizierten ersten und zweiten Hauptpolarisationszustandes zu detektieren.

13. Abschätzungseinheit (1709) für eine chromatische Dispersion zum Abschätzen einer chromatischen Dispersion von einem empfangenen optischen Signal, wobei das empfangene optische Signal einen ersten (x) und einen zweiten (y) Hauptpolarisationszustand aufweist, wobei die Abschätzungseinheit für die chromatische Dispersion Folgendes umfasst:
eine Mittelungseinheit (1723), die dazu konfiguriert ist, gedrehte Versionen des ersten (x) und des zweiten (y) Hauptpolarisationszustandes durch eine Kostenfunktion, CF, abzuschätzen, wobei die Drehung in Bezug auf einen Breitenwinkel, ϕ, und einen Längenwinkel, θ, auf einer Poincaré-Kugel stattfindet, wobei die Poincaré-Kugel Polarisationszustände des empfangenen optischen Signals beschreibt,
**dadurch gekennzeichnet, dass**
die Kostenfunktion, CF, auf verschiedenen Modifikationen, insbesondere vier verschiedenen Modifikationen, des ersten (x) und des zweiten (y) Hauptpolarisationszustandes basiert, wobei entsprechende Zeitablauffehler-Detektormetriken, TEDMs, erhalten werden, wobei eine Zeitablauffehler-Detektormetrik, TEDM, eine Qualität von Zeitablaufinformationen beschreibt, die von einem Abtastmoment, τ, des empfangenen optischen Signals unabhängig sind; und
ferner **dadurch gekennzeichnet, dass** sie eine Auswahleinheit (1719) umfasst, die dazu konfiguriert ist, höchste Werte, insbesondere drei höchste Werte, der Kostenfunktion auszuwählen und eine Polynomnäherung, insbesondere eine Polynomnäherung zweiter Ordnung, auf der Basis der ausgewählten höchsten Werte zum Liefern einer Abschätzung der chromatischen Dispersion als Ort eines Maximalwerts der Polynomnäherung verwendet.

14. Kohärenter optischer Empfänger (400, 600, 1700, 1800) zum Empfangen eines optischen Signals, wobei das empfangene optische Signal einen ersten (x) und einen zweiten (y) Hauptpolarisationszustand aufweist, wobei der kohärente optische Empfänger (400, 600, 1700, 1800) Folgendes umfasst:
eine Taktrückgewinnungseinheit (443) nach Anspruch 12;
eine Abschätzungseinheit (647, 1709) für die chromatische Dispersion nach Anspruch 13;
einen spannungsgesteuerten Oszillator (645), dessen Rückkopplungsschleife auf der Basis der Taktinformationen der Taktrückgewinnungseinheit (443) gesteuert wird;
eine Interpolationseinheit (649), die dazu konfiguriert ist, ein optisches Signal vom empfangenen optischen Signal auf der Basis des modifizierten ersten und zweiten Hauptpolarisationszustandes und auf der Basis der Abschätzung der chromatischen Dispersion zu interpolieren.

## Revendications

1. Procédé (100) de récupération d'informations d'horloge à partir d'un signal optique reçu, le signal optique reçu présentant un premier (x) et un deuxième (y) état principal de polarisation, le procédé comportant les étapes consistant à :
modifier (101) le premier et le deuxième état principal de polarisation selon un critère d'optimisation,
**caractérisé en ce que** le critère d'optimisation est basé sur une sélection de paramètres d'état de polarisation donnant la meilleure métrique de détecteur d'erreur de synchronisation, TEDM, la TEDM décrivant la qualité d'une information de synchronisation qui est indépendante d'un instant d'échantillonnage, τ, du signal optique reçu ; et **caractérisé en outre par** l'étape consistant à
détecter (103) les informations d'horloge d'après les premier et deuxième états principaux modifiés de polarisation.

2. Procédé (100) selon la revendication 1, la modification comportant l'étape consistant à : faire pivoter le premier (x) et le deuxième (y) état principal de polarisation par rapport à un angle de latitude, ϕ, et à un angle de longitude, θ, sur une sphère de Poincaré (201), la sphère de Poincaré (201) décrivant des états de polarisation du signal optique reçu.

3. Procédé (100) selon la revendication 1 ou la revendication 2, la modification comportant les étapes consistant à :
transformer le premier (x) et le deuxième (y) état principal de polarisation vers le domaine fréquentiel pour obtenir un premier état principal (X) transformé en fréquence et un deuxième état principal (Y) transformé en fréquence de polarisation ; et
appliquer une matrice de rotation, R, au premier état principal (X) transformé en fréquence et au deuxième état principal (Y) transformé en fréquence de polarisation.

4. Procédé (100) selon la revendication 1, la métrique de détecteur d'erreur de synchronisation, TEDM, dépendant d'une fonction caractéristique de détecteur d'erreur de synchronisation, TEDC, la fonction caractéristique de détecteur d'erreur de synchronisation, TEDC, approchant une fonction sinusoïdale de l'instant d'échantillonnage, τ, du signal optique reçu.

5. Procédé (100) selon la revendication 4, la métrique de détecteur d'erreur de synchronisation, TEDM, dépendant d'une puissance moyennée en temps de la fonction caractéristique de détecteur d'erreur de synchronisation, TEDC.

6. Procédé (100) selon l'une des revendications précédentes, comportant en outre l'étape consistant à :
fournir une estimation d'une dispersion chromatique (612a, 612b) du signal optique reçu.

7. Procédé (100) selon la revendication 6, l'estimation de la dispersion chromatique comportant l'étape consistant à :
calculer des moyennes de versions pivotées des premier (x) et deuxième (y) états principaux de polarisation par une fonction de coût, CF, la rotation ayant lieu par rapport à un angle de latitude, ϕ, et à un angle de longitude, θ, sur la sphère de Poincaré.

8. Procédé (100) selon la revendication 7, une rotation de chacune des versions pivotées des premier (x) et deuxième (y) états principaux de polarisation ayant lieu par rapport à une combinaison différente de valeurs de l'angle de latitude, ϕ, et de l'angle de longitude, θ.

9. Procédé (100) selon la revendication 7 ou la revendication 8, une version pivotée des premier et deuxième états principaux de polarisation étant obtenue en
transformant le premier (x) et le deuxième (y) état principal de polarisation vers le domaine fréquentiel, pour obtenir un premier état principal (X) transformé en fréquence et un deuxième état principal (Y) transformé en fréquence de polarisation ; et
appliquant une matrice de rotation, B, au premier état principal (X) transformé en fréquence et au deuxième état principal (Y) transformé en fréquence de polarisation.

10. Procédé (100) selon l'une des revendications 7 à 9, la fonction de coût étant basée sur différentes modifications, en particulier quatre modifications différentes, du premier (x) et du deuxième (y) état principal de polarisation, obtenant des métriques correspondantes de détecteur d'erreur de synchronisation, TEDM, une métrique de détecteur d'erreur de synchronisation, TEDM, décrivant la qualité d'une information de synchronisation.

11. Produit de programme d'ordinateur destiné à mettre en oeuvre le procédé (100) de l'une des revendications 1 à 10.

12. Unité de récupération d'horloge (443) destinée à récupérer des informations d'horloge à partir d'un signal optique reçu, le signal optique reçu présentant un premier (x) et un deuxième (y) état principal de polarisation, l'unité de récupération d'horloge comportant :
un modificateur (651) configuré pour modifier le premier (x) et le deuxième (y) état principal de polarisation selon un critère d'optimisation,
**caractérisée en ce que**
le critère d'optimisation est basé sur une sélection de paramètres d'état de polarisation donnant la meilleure métrique de détecteur d'erreur de synchronisation, TEDM, la TEDM décrivant la qualité d'une information de synchronisation qui est indépendante d'un instant d'échantillonnage, τ, du signal optique reçu ; et **caractérisée en outre par**
un détecteur (657) configuré pour détecter les informations d'horloge d'après les premier et deuxième états principaux modifiés de polarisation.

13. Unité d'estimation de dispersion chromatique (1709) destinée à estimer une dispersion chromatique à partir d'un signal optique reçu, le signal optique reçu présentant un premier (x) et un deuxième (y) état principal de polarisation, l'unité d'estimation de dispersion chromatique comportant :
une unité de moyenne (1723) configurée pour calculer une moyenne de versions pivotées des premier (x) et deuxième (y) états principaux de polarisation par une fonction de coût, CF, la rotation ayant lieu par rapport à un angle de latitude, ϕ, et un angle de longitude, θ, sur une sphère de Poincaré, la sphère de Poincaré décrivant des états de polarisation du signal optique reçu,
**caractérisée en ce que**
la fonction de coût, CF, est basée sur différentes modifications, en particulier quatre modifications différentes, du premier (x) et du deuxième (y) état principal de polarisation, obtenant des métriques correspondantes de détecteur d'erreur de synchronisation, TEDM, une métrique de détecteur d'erreur de synchronisation, TEDM, décrivant la qualité d'une information de synchronisation qui est indépendante d'un instant d'échantillonnage, τ, du signal optique reçu, et
**caractérisée en outre en ce qu'**elle comporte une unité de sélection (1719) configurée pour sélectionner des valeurs les plus élevées, en particulier trois valeurs les plus élevées, de la fonction de coût et **en ce qu'**elle utilise une approximation polynomiale, en particulier une approximation polynomiale du second ordre, sur la base des valeurs les plus élevées sélectionnées pour fournir une estimation de la dispersion chromatique en tant qu'emplacement d'une valeur maximale de l'approximation polynomiale.

14. Récepteur optique cohérent (400, 600, 1700, 1800) destiné à recevoir un signal optique, le signal optique reçu présentant un premier (x) et un deuxième (y) état principal de polarisation, le récepteur optique cohérent (400, 600, 1700, 1800) comportant :
une unité de récupération d'horloge (443) selon la revendication 12 ;
une unité d'estimation de dispersion chromatique (647, 1709) selon la revendication 13;
un oscillateur (645) commandé en tension dont la boucle de rétroaction est commandée d'après les informations d'horloge de l'unité de récupération d'horloge (443) ;
une unité d'interpolation (649) configurée pour interpoler un signal optique à partir du signal optique reçu d'après les premier et deuxième états principaux modifiés de polarisation et d'après l'estimation de la dispersion chromatique.
